# FASCICULE DE BREVET EUROPEEN

(11) **EP 3 282 304 B1**
(45) Date de publication et mention de la délivrance du brevet: **04.10.2023**
(21) Numéro de dépôt: 16306031.2
(22) Date de dépôt: 08.08.2016
(51) Int. Cl.: G02C 11/00, G02C 7/02

(54) **EQUIPEMENT OPHTALMIQUE; PROCÉDÉ D'ALIMENTATION D'UN ÉQUIPEMENT OPHTALMIQUE**
OPHTHALMISCHE AUSRÜSTUNG, VERFAHREN ZUR STROMVERSORGUNG EINER OPHTHALMISCHEN AUSRÜSTUNG
OPHTHALMIC DEVICE; METHOD FOR POWERING AN OPHTHALMIC DEVICE

(43) Date de publication de la demande: 14.02.2018
(73) Titulaire: Essilor International, 94220 Charenton-le-Pont (FR)
(72) Inventeur: PERROT, Stéphane, 94220 CHARENTON LE PONT (FR); ESCAICH, David, 94220 CHARENTON LE PONT (FR); BALLET, Jérôme, 94220 CHARENTON LE PONT (FR); BOUCHIER, Aude, 94220 CHARENTON LE PONT (FR); CHAUDAT, Willy, 94220 CHARENTON-LE-PONT (FR); ARCHAMBEAU, Samuel, 94220 CHARENTON-LE-PONT (FR)
(74) Mandataire: Plasseraud IP

(56) Documents cités:
- EP-A1- 2 961 033
- WO-A1-99/01063
- WO-A1-2014/184137
- WO-A2-2012/068527
- DE-U1- 20 103 525
- GB-A- 2 011 640
- US-A- 5 900 720
- US-A1- 2010 110 368

## Description

La présente invention concerne un équipement ophtalmique. La présente invention vise plus particulièrement un équipement ophtalmique comprenant une monture, au moins une lentille ophtalmique ayant un contour externe et disposée dans la monture, au moins un composant électronique. La présente invention vise également un procédé d'alimentation de l'inductance d'alimentation d'un équipement ophtalmique.

Des équipements ophtalmiques comprenant au moins un composant électronique sont connus de l'état de la technique. Le ou les composant(s) électronique(s) sont en général destinés à contribuer à la commande d'une fonction électro-commandée d'une lentille ophtalmique. A titre d'exemple, on peut citer les fonctions électro-commandées suivantes : fonction de transmission variable, par exemple fonction électrochrome, fonction d'affichage d'information, fonction de déplacement ou d'orientation de la lentille. On appelle communément de tels équipements des « équipements ophtalmiques actifs » ou également par facilité de langage des « verres actifs ». Les fonctions électro-commandées peuvent être actionnées par un composant passif, par exemple un composant résistif, un composant capacitif, un composant inductif, et/ou par un composant actif, par exemple une batterie, une diode, un capteur, un composants radio, un dispositif d'imagerie, un microprocesseur, un actionneur. De tels composants doivent être alimentés par un courant électrique. L'alimentation d'un composant par un courant électrique est souvent délicate et nécessite en général une connectique filaire qui peut poser des problèmes d'encombrement et/ou de fiabilité.

Le document US2010110368 A1 divulgue une monture de lunettes qui peut communiquer de l'énergie ou des signaux par induction. Une spire disposée en périphérie de la lentille coopère avec une spire située dans un boîtier 868. La spire disposée en périphérie est alimentée par la spire extérieure à la monture. La branche de la monture comprend une autre spire interagissant elle aussi avec une spire externe d'un dispositif de charge. La spire sur le bras latéral de la monture peut charger une batterie à bord de la monture.

La présente invention se propose de résoudre le problème technique en résultant et consistant à simplifier et à fiabiliser l'alimentation d'un composant d'un équipement ophtalmique par un courant électrique, notamment avec une solution technique simple à mettre en oeuvre, et qui de préférence ne soit pas impactante ou peu impactante sur l'esthétisme de l'équipement, et qui ne perturbe pas la vision du porteur de l'équipement.

A cette fin, la présente invention vise un équipement ophtalmique tel que défini dans la revendication 1.

Un tel équipement ophtalmique permet l'alimentation d'un composant de cet équipement ophtalmique par un courant électrique en diminuant, voire en supprimant, les connexions filaires. II en résulte des avantages en termes de simplification de la connectique, d'encombrement ainsi que de fiabilité. En outre la disposition du matériau conducteur en périphérie du contour externe de la lentille ophtalmique permet de placer la (les) spire(s) de manière discrète et de ne pas perturber significativement le champ visuel d'un porteur, voire de na pas l'altérer.

On entend par « lentille ophtalmique » toute lentille de nature à être disposée dans une monture ; une telle lentille ophtalmique peut être une lentille ophtalmique adaptée à corriger la vue d'un porteur, une lentille ophtalmique permettant d'offrir une transmission variable à un porteur, une lentille ophtalmique de nature à effectuer une présentation d'information à un porteur. La lentille ophtalmique peut comprendre un ou plusieurs composant(s) électronique(s). Si la lentille ophtalmique ne contient pas de composant électronique, au moins un composant électronique est disposé sur ou dans la monture de l'équipement ophtalmique. Des composants électroniques peuvent être disposés à la fois sur ou dans la monture de l'équipement ophtalmique et sur ou dans a lentille ophtalmique.

On entend par « monture » une monture de lunette, telle que présentée par exemple dans la norme ISO 8624:2011 (Optique ophtalmique - Montures de lunettes - Système de mesure et terminologie). Une telle monture comprend des moyens pour maintenir une, en général deux, lentille(s) ophtalmique(s) devant les yeux d'un porteur. Chaque lentille ophtalmique est disposée à l'intérieur d'une « boite » rectangulaire qui circonscrit la forme de la lentille ophtalmique. Une monture comprend en général des branches destinées à reposer sur les oreilles du porteur. Les lentilles ophtalmiques sont reliées aux branches par l'intermédiaire d'un « cercle » ou sont percées et fixées directement sur les branches. Dans le cas d'une monture « classique » ou « cerclée », le cercle est continu et entoure totalement le verre ; dans le cas d'une monture « Nylor », qui ne fait pas partie de l'invention, n'entoure pas totalement la lentille ophtalmique, qui est retenue par un fil, par exemple en nylon.

On entend par une « spire substantiellement fermée » une spire dont les deux extrémités sont proches et de nature à permettre une induction mutuelle avec un circuit magnétique d'induction source ; selon un mode de réalisation, les deux extrémités de la spire sont éloignées de moins de 1 cm, voire de moins de 5 mm ; selon un mode de réalisation, l'angle entre les deux extrémités de la spire sont de moins de 10°, voire de moins de 5°, en considérant l'angle entre deux droites passant par ces extrémités et par le barycentre du contour de la spire.

On entend par « induction mutuelle » une variation de courant dans un circuit magnétique qui entraîne l'apparition d'une tension dans un autre circuit magnétique. On cite, à titre d'exemple de méthode permettant l'induction mutuelle, les méthodes de transmission d'énergie sans fil selon le protocole « Qi », développé par le « Wireless Power Consortium ». Un « système Qi » comprend un support de transmission (un chargeur) et un récepteur compatible dans un dispositif mobile. Pour utiliser ce système, le dispositif mobile est placé sur le support de transmission, qui le recharge alors par induction magnétique. La transmission d'énergie sans fil peut s'effectuer à une distance allant jusqu'à 40 mm. Les puissances transmises peuvent être faibles, de 0 à 5 W, ou moyenne, jusqu'à 120 W. Pour la présente invention, le dispositif mobile est l'équipement ophtalmique.

De manière générale, la plus petite dimension intérieure au contour de la (des) spire(s) est supérieure ou égale à 1 cm, de préférence supérieure ou égale à 3 cm ; selon un mode de réalisation, on peut inscrire un cercle de 3 cm à l'intérieur du contour de la (des) spire(s). Il en résulte une bonne efficacité de la charge de l'inductance d'alimentation par un circuit magnétique d'induction source.

La présente invention vise également un équipement ophtalmique comprenant en outre les caractéristiques énoncées dans les modes de réalisations suivants, qui peuvent être combinés entre eux selon toutes les solutions techniquement envisageables :
- le matériau conducteur est disposé sous la forme d'une pluralité de spires fermées disposées en périphérie du contour externe de la lentille ophtalmique ; selon un autre mode de réalisation, le matériau conducteur est disposé sous la forme d'une spire substantiellement fermée disposés en périphérie du contour externe de la lentille ophtalmique
- les spires de l'inductance d'alimentation sont isolées les unes des autres, jointives et substantiellement concentriques ;
- le nombre de spires de l'inductance d'alimentation est inférieur ou égal à 50, par exemple est compris entre 5 et 20 spires ;
- la (les) spires(s) a (ont) une section dont la plus petite dimension et la plus grande dimension sont supérieures ou égales à 10 µm et inférieures ou égales à 200 µm, par exemple la section a un diamètre supérieur ou égal à 10 µm et inférieur ou égal à 200 µm ;
- le matériau conducteur est choisi parmi un matériau sous forme d'un fil ou d'une nappe, un matériau résultant du dépôt d'une encre conductrice, un matériau résultant d'une gravure chimique, un matériau résultant d'une gravure laser d'un dépôt conducteur, un matériau résultant d'un dépôt en phase chimique (CVD), un matériau résultant d'un dépôt en phase physique (PVD) ;
- le composant électronique alimenté par l'inductance d'alimentation est un composant passif, notamment choisi parmi la liste de composants passifs constituée d'un composant résistif, un composant capacitif, un composant inductif, ou est un composant actif, notamment choisi parmi la liste de composants actifs constituée d'une batterie, une diode, un capteur, un composants radio, un dispositif d'imagerie, un microprocesseur, un actionneur, par exemple d'un moteur ;
- la (les) spire(s) de l'inductance d'alimentation est (sont) configurée(s) pour former une antenne de manière à permettre un échange de données entre l'équipement ophtalmique et un dispositif d'émission et/ou de réception de données.

La présente invention vise également un ensemble comprenant un équipement ophtalmique défini ci-dessus et un chargeur comprenant un circuit magnétique d'induction source configuré pour l'alimentation de l'inductance d'alimentation par induction mutuelle entre l'inductance d'alimentation et le circuit magnétique d'induction source.

La présente invention vise également un procédé d'alimentation de l'inductance d'alimentation d'un équipement ophtalmique défini ci-dessus qui comprend une étape de rapprochement dudit équipement ophtalmique et d'un circuit magnétique d'induction source de manière à permettre l'induction mutuelle entre l'inductance d'alimentation et le circuit magnétique d'induction source, puis une étape de charge de l'inductance d'alimentation par le circuit magnétique d'induction source.

L'invention sera mieux comprise si l'on se réfère aux dessins annexés où :
- les figures 1 et 2 représentent un exemple d'une partie d'un équipement ophtalmique qui ne fait pas partie de l'invention;
- la figure 3 représente un équipement ophtalmique selon l'invention;
- la figure 4 représente un mode de réalisation d'une partie d'un équipement ophtalmique selon l'invention.

Il convient de noter que les proportions des composants du dispositif représenté ne sont pas nécessairement respectées et que les figures ont pour seule fonction de faciliter la compréhension de la présente invention. Des références numériques identiques correspondent aux mêmes composants représentés sur les différentes figures.

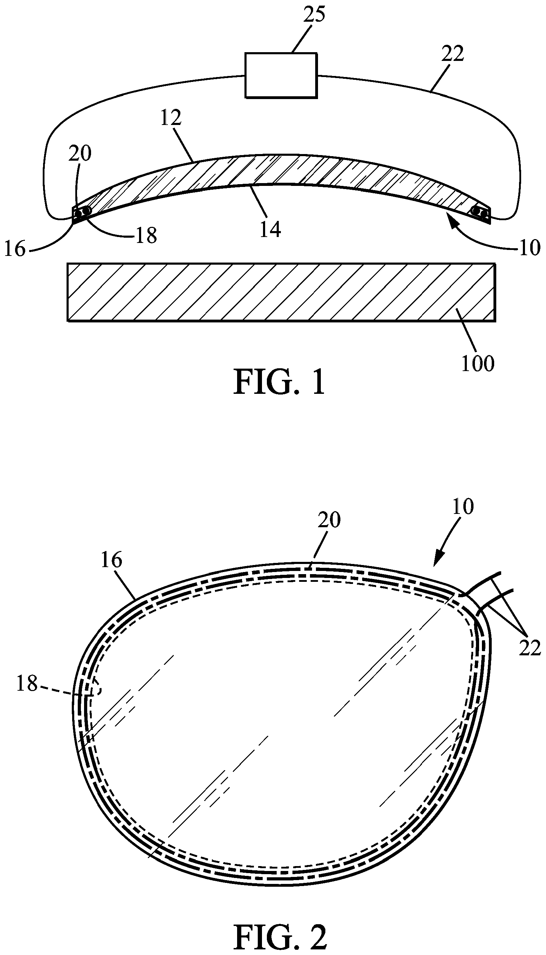

La figure 1 représente une coupe schématique d'un exemple d'une partie d'un ensemble comprenant un équipement ophtalmique qui ne fait pas partie de l'invention qui comprend une lentille ophtalmique 10; la figure 2 représente une vue de dessus schématique de cette lentille ophtalmique 10. La lentille ophtalmique 10 a un contour externe 16 ; cette lentille ophtalmique est disposée dans une monture qui n'est pas représentée. La lentille ophtalmique 10 comprend une face avant convexe 12 et une face arrière concave 14. La lentille ophtalmique 10 comprend un matériau conducteur disposé en périphérie du contour externe 16 de la lentille ophtalmique sous la forme de deux spires 20 ; la spire située au plus près du contour externe 16 est substantiellement fermée et celle plus à l'intérieur est fermée. Dans cet exemple, la lentille ophtalmique 10 comprend une rainure périphérique 18 et les spires 20 sont disposées dans ladite rainure périphérique. Ces spires 20 sont isolées les unes des autres, jointives et substantiellement concentriques. Elles sont reliées par un conducteur 22, par exemple par un fil, à un composant électronique 25. Ces spires 20 forment une inductance d'alimentation permettant l'alimentation électrique du composant électronique 25 ; l'alimentation de cette inductance d'alimentation s'effectue par induction mutuelle avec un circuit magnétique d'induction source compris dans le chargeur 100.

La périphérie du contour externe de la lentille ophtalmique est formée par une zone comprise entre le contour externe (le bord externe) de la lentille ophtalmique et une ligne distante de 2 mm dudit contour externe, située radialement vers l'intérieur de la lentille ophtalmique.

La périphérie du contour externe de la lentille ophtalmique est formée par une zone définie à partir du bord du cercle de la monture dans lequel est disposé la lentille ophtalmique ; cette zone est comprise entre ce bord de la monture et une ligne distante de 2 mm de ce bord, située radialement vers l'intérieur de la lentille ophtalmique ; il est ainsi possible de ne pas empiéter de plus de 2mm à l'intérieur de la zone optique utile, afin de limiter très significativement la perturbation de la vision du porteur. La zone optique utile est l'ensemble des points de la lentille qui peuvent être balayés par le regard du porteur.

Le matériau conducteur est intégralement invisible pour le porteur, par exemple quand le matériau conducteur est masqué par le drageoir de la monture. Le conducteur peut être disposé en périphérie du contour externe sur la majorité du contour (afin de ne pas perturber la vision du porteur), de préférence sur au moins 80% du contour. Si une partie du conducteur n'est pas comprise en périphérie de contour, cette partie est préférentiellement située du côté temporal, afin de limiter l'impact sur le champ visuel, et ne dépasse pas 20% du contour.

Le matériau conducteur est du cuivre.

Le matériau conducteur est un fil, par exemple recouvert d'un émail ou de tout isolant (vernis polyuréthane par exemple).

Le matériau conducteur résulte du dépôt d'une encre conductrice. Le matériau conducteur résulte d'une gravure chimique, par exemple de type photo-lithogravure. Le matériau conducteur résulte d'un dépôt en phase chimique (CVD) ou en phase physique (PVD).

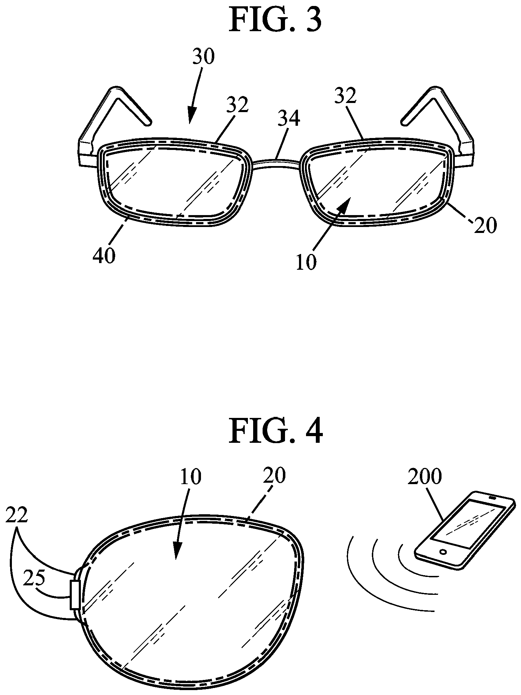

La figure 3 représente schématiquement un équipement ophtalmique selon l'invention où la monture 30 comprend deux cercles continus 32 dans lesquels sont disposées des lentilles ophtalmiques 10. Ces cercles continus sont reliés par un pont 34. Un matériau conducteur est disposé en périphérie du contour externe de chacune des lentilles ophtalmiques, sur et/ou dans chacune des lentilles ophtalmiques, sous la forme d'au moins une spire substantiellement fermée 20, de manière à former une inductance d'alimentation permettant l'alimentation électrique d'un composant électronique (non représenté). Un matériau conducteur est disposé sous la forme d'au moins une spire substantiellement fermée 40 sur ou dans le cercle de la monture de manière à former un circuit magnétique d'induction source. Ce circuit magnétique d'induction source est configuré pour alimenter par induction mutuelle des spires 20 de l'inductance d'alimentation. Le circuit magnétique d'induction source est alimenté par un composant électronique (non représenté), par exemple par une batterie située sur une des branches de la monture. On peut ainsi alimenter un dispositif électronique disposé sur chaque lentille ophtalmique, où ledit dispositif électronique permet de commander une fonction optique électro-commandée pour chaque lentille ophtalmique.

Réciproquement, la lentille ophtalmique peut être dotée d'un moyen ayant une fonction de source d'énergie (par exemple une lentille ophtalmique possédant une surface photovoltaïque) ; dans ce cas, la spire 20 peut être utilisée en tant que circuit magnétique d'induction source. La spire 40 sur et/ou dans le cercle de la monture peut être alors alimentée par induction mutuelle avec la spire 20, et, selon un mode de réalisation, une batterie située dans une branche de la monture peut alors être rechargée.

La figure 4 représente schématiquement un mode de réalisation où une lentille ophtalmique faisant partie d'un équipement ophtalmique selon la présente invention peut échanger des informations avec un dispositif extérieur audit équipement ophtalmique. Dans ce cas, la (les) spire(s) de l'inductance d'alimentation est (sont) configurée(s) pour former une antenne de manière à permettre un échange de données entre l'équipement ophtalmique et un dispositif d'émission et/ou de réception de données, par exemple un téléphone portable 200. La lentille ophtalmique 10 et le téléphone portable 200 peuvent ainsi échanger entre eux en mode non-filaire grâce à une interface de communication (par exemple selon un protocole choisi parmi les protocoles télécommunications à courte distance Bluetooth, Zigbee, Wifi, ANT).

Grâce à un équipement ophtalmique selon la présente invention, il est possible de mettre en oeuvre un procédé d'alimentation d'un équipement ophtalmique qui comprend une étape de rapprochement dudit dispositif et d'un circuit magnétique d'induction source de manière à permettre l'induction mutuelle entre l'inductance d'alimentation de l'équipement ophtalmique et le circuit magnétique d'induction source, puis une étape de charge de l'inductance d'alimentation par le circuit magnétique d'induction source.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre des revendication annexées et notamment toutes combinaisons des différents modes de fonctionnement décrits précédemment, pouvant être pris séparément ou en association.

## Revendications

1. Equipement ophtalmique comprenant une monture (30), au moins une lentille ophtalmique (10) ayant un contour externe (16) et disposée dans la monture, au moins un composant électronique (25), où la monture et/ou la (les) lentille(s) ophtalmique(s) comprend (comprennent) un matériau conducteur disposé en périphérie du contour externe de la lentille ophtalmique sous la forme d'au moins une spire (20) substantiellement fermée, de manière à former une inductance d'alimentation permettant l'alimentation électrique du composant électronique, et où l'alimentation de l'inductance d'alimentation s'effectue par induction mutuelle avec un circuit magnétique d'induction source, dans lequel la lentille ophtalmique comprend une rainure périphérique (16) et où la (les) spire(s) de l'inductance d'alimentation est (sont) disposée(s) dans ladite rainure périphérique, dans lequel la monture comprend un cercle continu dans lequel est disposée la lentille ophtalmique, et où un matériau conducteur est disposé sous la forme d'au moins une spire (40) substantiellement fermée sur et/ou dans le cercle continu de la monture de manière à former un circuit magnétique d'induction source configuré pour alimenter par induction mutuelle de la (des) spire(s) de l'inductance d'alimentation disposée(s) en périphérie sur et/ou dans la lentille ophtalmique, et la monture comprend deux branches où une batteries est placée sur l'une des branche afin d'alimenter le circuit magnétique d'induction source.

2. Equipement ophtalmique selon la revendication précédente, dans lequel le matériau conducteur est disposé sous la forme d'une pluralité de spires fermées disposées en périphérie du contour externe de la lentille ophtalmique.

3. Equipement ophtalmique selon la revendication précédente, dans lequel les spires de l'inductance d'alimentation sont isolées les unes des autres, jointives et substantiellement concentriques.

4. Equipement ophtalmique selon l'une des revendications 2 ou 3, dans lequel le nombre de spires de l'inductance d'alimentation est inférieur ou égal à 50, par exemple compris entre 5 et 20 spires.

5. Equipement ophtalmique selon l'une quelconque des revendications précédentes, dans lequel la (les) spires(s) a (ont) une section dont la plus petite dimension et la plus grande dimension sont supérieures ou égales à 10 µm et inférieures ou égales à 200 µm, par exemple la section a un diamètre supérieur ou égal à 10 µm et inférieur ou égal à 200 µm.

6. Equipement ophtalmique selon l'une quelconque des revendications précédentes, dans lequel le matériau conducteur est choisi parmi un matériau sous forme d'un fil, d'une nappe, un matériau résultant du dépôt d'une encre conductrice, un matériau résultant d'une gravure chimique, un matériau résultant d'une gravure laser d'un dépôt conducteur, un matériau résultant d'un dépôt en phase chimique (CVD), un matériau résultant d'un dépôt en phase physique (PVD).

7. Equipement ophtalmique selon l'une quelconque des revendications précédentes, dans lequel le composant électronique alimenté par l'inductance d'alimentation est un composant passif, notamment choisi parmi la liste de composants passifs constituée d'un composant résistif, un composant capacitif, un composant inductif, ou est un composant actif, notamment choisi parmi la liste de composants actifs constituée d'une batterie, une diode, un capteur, un composants radio, un dispositif d'imagerie, un microprocesseur, un actionneur, par exemple d'un moteur.

8. Equipement ophtalmique selon l'une quelconque des revendications précédentes, dans lequel la (les) spire(s) de l'inductance d'alimentation est (sont) configurée(s) pour former une antenne de manière à permettre un échange de données entre l'équipement ophtalmique et un dispositif d'émission et/ou de réception de données.

9. Equipement ophtalmique selon l'une quelconque des revendications 1 à 8, dans lequel la monture comprend un cercle continu dans lequel est disposée la lentille ophtalmique et où la (les) spire(s) de l'inductance d'alimentation est (sont) disposée(s) est (sont) disposée(s) sur et/ou dans le cercle continu de la monture.

10. Equipement ophtalmique selon l'une quelconque des revendications 1 à 8, dans lequel la (les) spire(s) de l'inductance d'alimentation est (sont) disposée(s) en périphérie sur et/ou dans la lentille ophtalmique.

11. Ensemble comprenant un équipement ophtalmique selon l'une quelconque des revendications 1 à 10 et un chargeur comprenant un circuit magnétique d'induction source configuré pour l'alimentation de l'inductance d'alimentation par induction mutuelle entre l'inductance d'alimentation et le circuit magnétique d'induction source.

12. Procédé d'alimentation de l'inductance d'alimentation d'un équipement ophtalmique selon l'une quelconque des revendications 1 à 10 qui comprend une étape de rapprochement dudit équipement ophtalmique et d'un circuit magnétique d'induction source de manière à permettre l'induction mutuelle entre l'inductance d'alimentation et le circuit magnétique d'induction source, puis une étape de charge de l'inductance d'alimentation par le circuit magnétique d'induction source.

## Patentansprüche

1. Ophthalmische Ausrüstung, die ein Gestell (30), mindestens eine ophthalmische Linse (10) mit einem Außenumriss (16) und im Gestell angeordnet mindestens ein elektronisches Bauelement (25) enthält, wobei das Gestell und/oder die ophthalmische(n) Linse(n) ein leitendes Material enthält(enthalten), das am Umfang des Außenumrisses der ophthalmische Linse in Form mindestens einer im Wesentlichen geschlossenen Windung (20) angeordnet ist, um eine Versorgungsinduktivität zu formen, die die Stromversorgung des elektronischen Bauelements erlaubt, und wobei die Versorgung der Versorgungsinduktivität durch gegenseitige Induktion mit einem Quellinduktion-Magnetkreis erfolgt, wobei die ophthalmische Linse eine Umfangsnut (16) enthält, und wobei die Windung(en) der Versorgungsinduktivität in der Umfangsnut angeordnet ist(sind), wobei das Gestell einen durchgehenden Kreis enthält, in dem die ophthalmische Linse angeordnet ist, und wobei ein leitendes Material in Form mindestens einer im Wesentlichen geschlossenen Windung (40) auf und/oder in dem durchgehenden Kreis des Gestells angeordnet ist, um einen Quellinduktion-Magnetkreis zu formen, der konfiguriert ist, durch gegenseitige Induktion der am Umfang auf und/oder in der ophthalmischen Linse angeordneten Windung(en) der Versorgungsinduktivität zu versorgen, und das Gestell zwei Bügel enthält, wobei eine Batterie auf einem der Bügel platziert ist, um den Quellinduktion-Magnetkreis zu versorgen.

2. Ophthalmische Ausrüstung nach dem vorhergehenden Anspruch, wobei das leitende Material in Form einer Vielzahl von geschlossenen Windungen angeordnet ist, die am Umfang des Außenumrisses der ophthalmischen Linse angeordnet sind.

3. Ophthalmische Ausrüstung nach dem vorhergehenden Anspruch, wobei die Windungen der Versorgungsinduktivität voneinander isoliert, aneinandergrenzend und im Wesentlichen konzentrisch sind.

4. Ophthalmische Ausrüstung nach einem der Ansprüche 2 oder 3, wobei die Anzahl von Windungen der Versorgungsinduktivität geringer als oder gleich 50 ist, zum Beispiel zwischen 5 und 20 Windungen liegt.

5. Ophthalmische Ausrüstung nach einem der vorhergehenden Ansprüche, wobei die Windungen(en) einen Querschnitt hat(haben), dessen kleinste Abmessung und größte Abmessung größer als oder gleich 10 µm und kleiner als oder gleich 200 µm sind, zum Beispiel hat der Querschnitt einen Durchmesser von mehr als oder gleich 10 µm und kleiner als oder gleich 200 µm.

6. Ophthalmische Ausrüstung nach einem der vorhergehenden Ansprüche, wobei das leitende Material unter einem Material in Form eines Drahts, einer Schicht, einem aus der Abscheidung einer leitenden Farbe resultierenden Material, einem aus einem chemischen Ätzen resultierenden Material, einem aus einer Lasergravur eines leitenden Belags resultierenden Material, einem aus einer chemischen Gasphasenabscheidung (CVD) resultierenden Material, einem aus einer physikalischen Gasphasenabscheidung (PVD) resultierenden Material ausgewählt wird.

7. Ophthalmische Ausrüstung nach einem der vorhergehenden Ansprüche, wobei das von der Versorgungsinduktivität versorgte elektronische Bauelement ein passives Bauelement ist, insbesondere ausgewählt aus der Liste passiver Bauelemente bestehend aus einem resistiven Bauelement, einem kapazitiven Bauelement, einem induktiven Bauelement, oder ein aktives Bauelement ist, insbesondere ausgewählt aus der Liste aktiver Bauelemente bestehend aus einer Batterie, einer Diode, einem Sensor, einem Funk-Bauelement, einer Bildgebungsvorrichtung, einem Mikroprozessor, einem Stellantrieb, zum Beispiel einem Motor.

8. Ophthalmische Ausrüstung nach einem der vorhergehenden Ansprüche, wobei die Windung(en) der Versorgungsinduktivität konfiguriert ist(sind), eine Antenne zu bilden, um einen Datenaustausch zwischen der ophthalmischen Ausrüstung und einer Daten-Sende- und/oder Empfangsvorrichtung zu erlauben.

9. Ophthalmische Ausrüstung nach einem der Ansprüche 1 bis 8, wobei das Gestell einen durchgehenden Kreis enthält, in dem die ophthalmische Linse angeordnet ist, und wobei die Windung(en) der Versorgungsinduktivität auf und/oder in dem durchgehenden Kreis des Gestells angeordnet ist (sind) .

10. Ophthalmische Ausrüstung nach einem der Ansprüche 1 bis 8, wobei die Windung(en) der Versorgungsinduktivität am Umfang auf und/oder in der ophthalmischen Linse angeordnet ist (sind) .

11. Einheit, die eine ophthalmische Ausrüstung nach einem der Ansprüche 1 bis 10 und ein Ladegerät enthält, das einen Quellinduktion-Magnetkreis enthält, der für die Versorgung der Versorgungsinduktivität durch gegenseitige Induktion zwischen der Versorgungsinduktivität und dem Quellinduktion-Magnetkreis konfiguriert ist.

12. Verfahren zur Versorgung der Versorgungsinduktivität einer ophthalmischen Ausrüstung nach einem der Ansprüche 1 bis 10, das einen Schritt der Annäherung der ophthalmischen Ausrüstung und eines Quellinduktion-Magnetkreises, um die gegenseitige Induktion zwischen der Versorgungsinduktivität und dem Quellinduktion-Magnetkreis zu erlauben, dann einen Schritt des Ladens der Versorgungsinduktivität durch den Quellinduktion-Magnetkreis enthält.

## Claims

1. Piece of ophthalmic equipment comprising a frame (30), at least one ophthalmic lens (10) having an external outline (16) and arranged in the frame, and at least one electronic component (25), the frame and/or the ophthalmic lens(es) comprising a conductive material arranged, on the periphery of the external outline of the ophthalmic lens, in the form of at least one substantially closed turn (20), so as to form a supply inductor allowing the electronic component to be supplied with electrical power, and the supply inductor being supplied with power via mutual inductance with an inductive source magnetic circuit, wherein the ophthalmic lens comprises a peripheral groove (16), and the turn(s) of the supply inductor being arranged in said peripheral groove, wherein the frame comprises a continuous rim in which the ophthalmic lens is arranged, and a conductive material being arranged in the form of at least one substantially closed turn (40) on and/or in the continuous rim of the frame so as to form an inductive source magnetic circuit configured to supply, via mutual inductance, the turn(s) of the supply inductor with power, the turn(s) being arranged peripherally on and/or in the ophthalmic lens, and the frame comprises two temples, a battery being placed in one of the temples in order to supply the inductive source magnetic circuit with power.

2. Piece of ophthalmic equipment according to the preceding claim, wherein the conductive material is arranged in the form of a plurality of closed turns that are arranged on the periphery of the external outline of the ophthalmic lens.

3. Piece of ophthalmic equipment according to the preceding claim, wherein the turns of the supply inductor are insulated from one another, contiguous and substantially concentric.

4. Piece of ophthalmic equipment according to either of Claims 2 and 3, wherein the number of turns of the supply inductor is lower than or equal to 50 and for example comprised between 5 and 20 turns.

5. Piece of ophthalmic equipment according to any one of the preceding claims, wherein the turn(s) has (have) a cross section the smallest dimension and the largest dimension of which are larger than or equal to 10 µm and smaller than or equal to 200 µm, the cross section for example having a diameter larger than or equal to 10 µm and smaller than or equal to 200 µm.

6. Piece of ophthalmic equipment according to any one of the preceding claims, wherein the conductive material is chosen from a material taking the form of a wire, of a layer, a material resulting from the deposition of a conductive ink, a material resulting from chemical etching, a material resulting from laser etching of a conductive deposit, a material resulting from chemical vapour deposition (CVD), a material resulting from physical vapour deposition (PVD).

7. Piece of ophthalmic equipment according to any one of the preceding claims, wherein the electronic component supplied with power by the supply inductor is a passive component, in particular one chosen from the following list of passive components: a resistive component, a capacitive component and an inductive component, or is an active component, in particular one chosen from the following list of active components: a battery, a diode, a sensor, a radio component, an imaging device, a microprocessor, and an actuator, of a motor for example.

8. Piece of ophthalmic equipment according to any one of the preceding claims, wherein the turn(s) of the supply inductor is (are) configured to form an antenna so as to allow an exchange of data between the piece of ophthalmic equipment and a device for transmitting and/or receiving data.

9. Piece of ophthalmic equipment according to any one of Claims 1 to 8, wherein the frame comprises a continuous rim in which the ophthalmic lens is arranged, and the turn(s) of the supply inductor being arranged on and/or in the continuous rim of the frame.

10. Piece of ophthalmic equipment according to any one of Claims 1 to 8, wherein the turn(s) of the supply inductor is (are) arranged peripherally on and/or in the ophthalmic lens.

11. Assembly comprising a piece of ophthalmic equipment according to any one of Claims 1 to 10 and a charger comprising an inductive source magnetic circuit configured to supply the supply inductor with power via mutual inductance between the supply inductor and the inductive source magnetic circuit.

12. Method for supplying the supply inductor of a piece of ophthalmic equipment according to any one of Claims 1 to 10 with power, which comprises a step of bringing said piece of ophthalmic equipment and an inductive source magnetic circuit close enough to allow mutual inductance between the supply inductor and the inductive source magnetic circuit, then a step of loading the supply inductor with the inductive source magnetic circuit.
